Europäisches Patentamt

**European Patent Office**

Office européen des brevets

(19)

(11) Publication number: **0 037 824**
**B1**

(12) # EUROPEAN PATENT SPECIFICATION

(45) Date of publication of patent specification: **02.11.83**

(51) Int. Cl.³: **A 47 J 31/40,**
**A 47 J 31/46, G 01 F 11/18**

(21) Application number: **80901976.3**

(22) Date of filing: **17.10.80**

(54) **DRINK DISPENSER**

(30) Priority: **23.10.79 SE 7908778**

(43) Date of publication of application:
**21.10.81 Bulletin 81/42**

(45) Publication of the grant of the patent:
**02.11.83 Bulletin 83/44**

(84) Designated Contracting States:
**AT CH DE FR GB LI LU NL SE**

(56) References cited:
**AT - B - 330 393**

(73) Proprietor: **Olsson, Karl-Olof Henry**
**Narvavägen 7**
**S-114 60 Stockholm (SE)**

(72) Inventor: **Olsson, Karl-Olof Henry**
**Narvavägen 7**
**S-114 60 Stockholm (SE)**

(74) Representative: **Hagelbäck, Evert Isidor**
**c/o AB Electrolux Patentavdelningen**
**S-105 45 Stockholm (SE)**

Courier Press, Leamington Spa, England.

# Drink dispenser

The invention relates to a device for preparing cup portions of a drink from powder and hot water comprising a movable means for dosing powder and for pouring the dose into a drink vessel arranged under an opening from a supply of powder substance and a hot water container/heater with a conduit having a valve, the opening of the conduit from the container being arranged over and directed to the drink vessel and the dosing means having an activating member arranged in one position of the dosing means to keep the valve open against the action of a spring.

Such a device is known from AT—B 330 393.

This device has an extra fan 68 in a steam removal conduit 70—69—71 in order to prevent clogging of valve means 31 to powder vessel 12. The known device also has a movable, tiltable cup for mixing powder and hot water before delivery of the mixture of the cup 75. This arrangement is costly but still difficult to control without spilling.

The present invention has for an object to remove the above drawbacks and to provide a dosing device which allows portioning of different doses of powder substance, each selected dose having an exactly defined volume. Another object is to simplify water supply.

This is achieved with a device according to the characterizing features of claim 1.

When the drink vessel is placed under the discharge opening of the powder substance and the hot water is poured into it, the steam must not cause the powder in the dosing device and in the container for powder substance to stick together and clog the dosing device and the powder substance container, respectively. Such clogging is prevented with a dosing device according to the invention.

Although the invention will be described with reference to an arrangement with two dosing slides for differentiated portioning, it will be evident that the principles which form the basis of the described construction can be used for making dosing devices with three or more dosing slides.

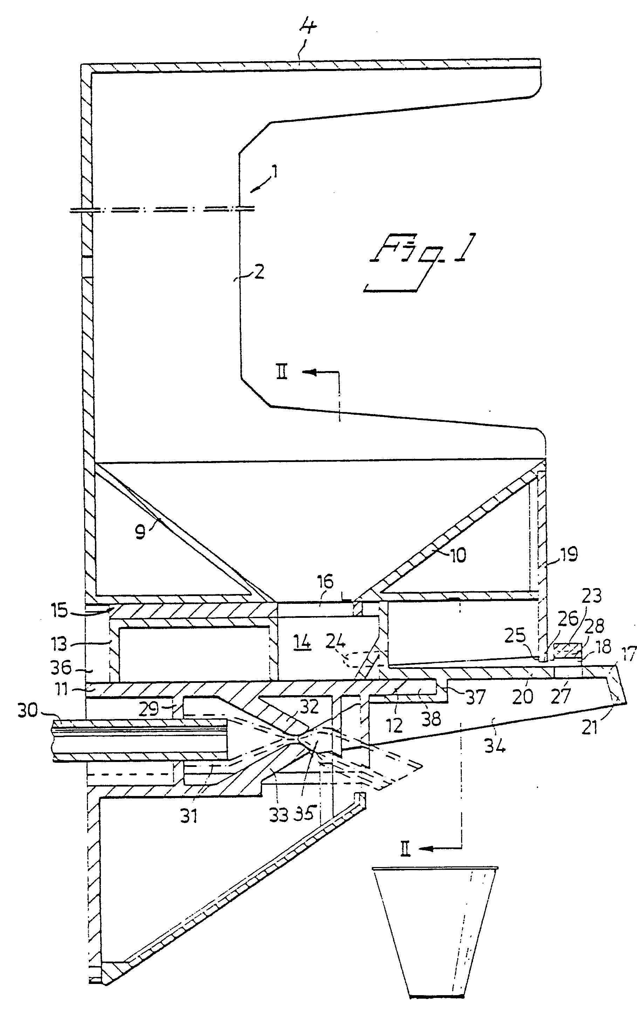

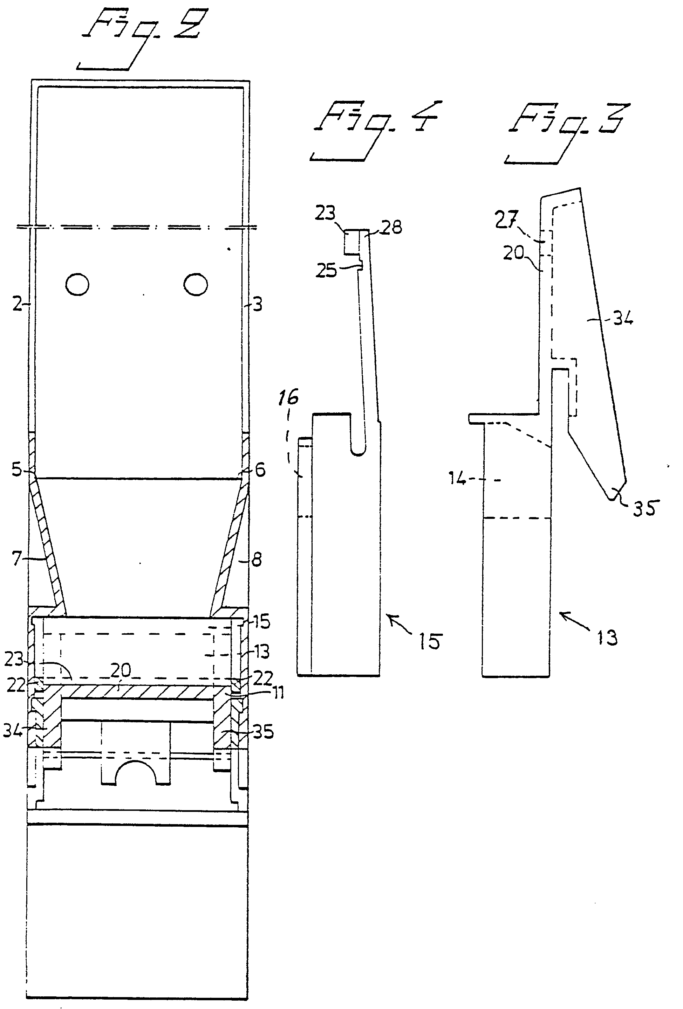

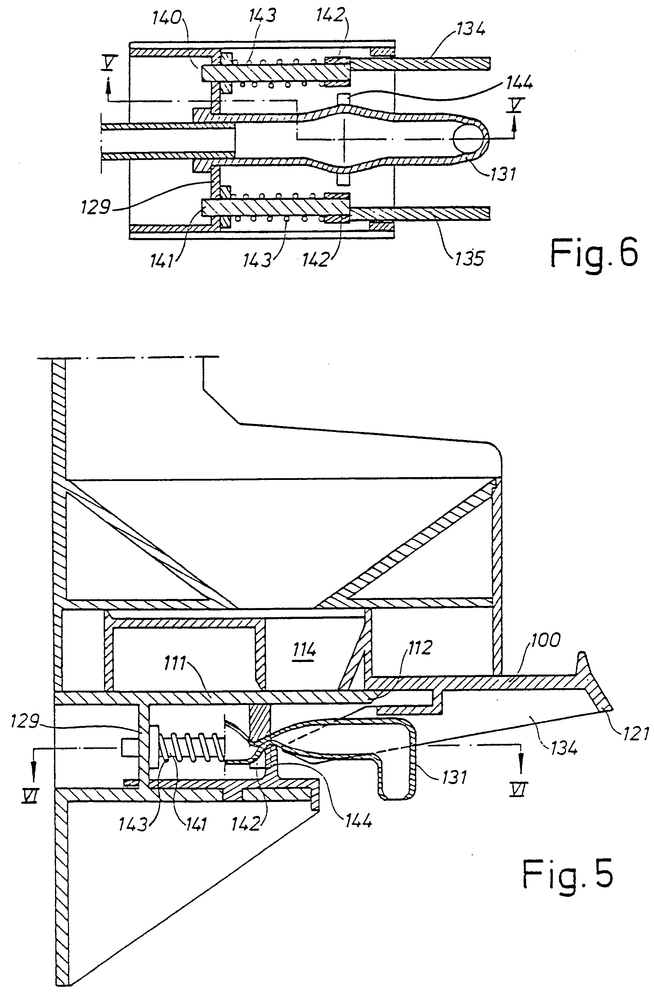

The invention will be described below in connection with the attached drawings, in which Fig. 1 is a side sectional view of a dosing device according to the invention, Fig. 2 is a sectional view along the line II—II of Fig. 1, Fig. 3 is a cross sectional view of the lower dosing slide, and Fig. 4 is a cross sectional view of the upper dosing slide. Another embodiment is shown in Figs. 5 and 6.

In Figs. 1 and 2, a closing device 1 is shown which comprises side walls 2, 3 connected to each other by a horizontal top wall 4. Shoulders 5, 6 in the side wall form support surfaces for a container with powder substance inserted into the dosing device. The side walls have converging sections 7, 8, which together with inclined transverse walls 9, 10 between the side walls form a shaft and a shaft opening for powder substance from the container, not shown. A bottom plate 11 extends horizontally between the side walls 2, 3 and has a bevelled emptying edge 12. A lower dosing slide 13 is slidably arranged on the bottom plate 11. The lower dosing slide 13 has a through hole 14 (compare Fig. 3). An upper dosing slide 15 is slidably arranged on the lower dosing slide and has a through hole 16. The dosing slides 13, 15 are movable from a first position shown in Fig. 1, in which the holes 14 and 16 are being filled with powder substance, to a second position, not shown, in which the powder substance in dosing slides is emptied over the emptying edge 12 and falls into the drink vessel below.

Thus, in the common case, to which the shown embodiment of the dosing device does not refer, by moving both or only one of the dosing slides to the second emptying position the dose can be differentiated. Thus, the largest dose is obtained when all slides are simultaneously moved to the second position, not shown, while a smaller dose is obtained if either one or the other of the dosing slides is moved to the second position.

The dose supplied by each one of the dosing slides is determined by the volume of the through hole, which in turn is determined for instance by the height of the slide. As pointed out in the introduction, more than two dosing slides can be used according to the invention. In the special embodiment shown, two such slides are used, and either both together or only the lower one can pour its contents over the emptying edge 12.

The lower dosing slide 13 has a grip member 17 and the upper dosing slide 15 has another grip member 18. The grip members project out of a front wall 19 of the drink dispenser. The grip member 17 has the shape of a plate 20 with a downwardly bent grip flange 21. The grip member 18 of the upper dosing slide 15 is formed by two legs 22, which extend downwards from the side edges of the slide and project forward ahead of the front wall 19 where they are connected to each other by a web 23. Each leg 22 has a recessed portion 24 shown by dotted lines in Fig. 1, which gives the legs resiliency. The legs 22 extend over the side edges of the lower dosing slide. Each leg 22 further has a recess 25 which serves as a locking means co-operating with the lower horizontal edge 26 of the front wall 19. The locking means prevent movement of the upper dosing slide 15.

The grip member 17 of the lower dosing slide has a recess 27 in the shape of a square through opening. The web 23 of the upper dosing slide 15 has an engagement member 28, here in the shape of a tap which fits into the recess 27 when the grip member 18 is depressed.

To move both dosing slides 13, 15 to the emptying position above the emptying edge 12 it is thus required firstly that the grip member 18 is depressed to that the engagement member 28 fits into the recess 27 and secondly that the grip member 17 is pulled with the parts in engagement, both slides moving as one unit and together delivering the contents of the holes 14 and 16 past the emptying edge 12. Thereafter the slides are pushed back to the position shown in Fig. 1, whereafter the grip on the members 17 and 18 is released. The locking means or recess 25 then snaps into engagement with the lower edge of the front wall 19 and the starting position is reached.

The bottom plate 11 on its underside has a transverse wall 29 which serves as a holder for a pipe 30 connected to a hot water container, not shown. A valve construction, known per se, comprises an elastic hose 31, one end of which is pushed over the end of the pipe 30 and the other end of which opens above the drink vessel, and two resilient lips 32, 33 control the supply of hot water to the drink vessel. The lips 32, 33 are inclined against each other and extend mainly over the total distance between the side walls 2, 3. The hose is completely clamped together between the lips and is situated approximately centrally between the side walls 2, 3. The valve is operated by an actuating means which is connected to the lower dosing slide and in the embodiment shown is formed by two legs 34, 35 below the plate 20 and directed rearwardly. The free end of the legs is formed as a tip which projects between the lips 32, 33 in the way shown in Fig. 1. Thus, by moving the lower dosing slide to the left from the position shown in Fig. 1, which is made possible by the free space 36, the lips 32, 33 are separated and hot water flows down into the drink vessel. The hot steam, however, is prevented from contacting the powder in the shaft and in the through holes 14 and 16 in the dosing slides because the plate 20 covers the opening between the front wall 19 and the bottom plate 11 completely.

In order also to protect the emptying edge 12 from contact with hot steam, a strip 37 is arranged at the underside of the plate 20. The strip extends across the plate between the side walls and has a groove 38 the cross section of which corresponds to the cross section of the emptying edge 12. Beside protecting the emptying edge from contact with hot steam the strip 37 cleans the emptying edge mechanically.

The embodiment described above can be modified and varied in a many ways within the frame of the inventive idea.

An example thereof is illustrated in Figs. 5 and 6 showing a central vertical section and a horizontal section along the line VI—VI of Fig. 5.

In Fig. 5 appears that one single slide 100 is used for the handling. The slide is shown in a position with a dosing space 114 filled with a dose of soluble powder substance. When the grip flange 121 is pulled, so that the space 114 will be located outside the emptying edge 112, the powder in the space 114 will flow into a vessel placed below the space.

Below the bottom plate 111 there is a transverse vertical wall 129 with a central hole for a conduit or hose 131. Beside this hole the wall has holes for two guide pins 140, 141, which slide in the holes. The pins are attached to a movable cross bar 142 and around each pin there is a compression spring 143. The two springs press the cross bar 142 against a lower fixed ridge 144. Between the bar 142 and the ridge a hose 131 is located. It is kept closed by the springs.

When the grip flange 121 is pushed in, the legs 134, 135 contact the cross bar 142 in line with the guide pins 140, 141 so that the cross bar is moved against the action of the springs 143, whereby the conduit is kept open as long as the handle is kept in the pushed-in position. Thereby hot water flows into the vessel below the opening of the hose 131.

The arrangement described above is suitable to arrange as a coin-operated dispenser with a small motor giving the slide 100 the desired movements.

**Claims**

1. Device for preparing cup portions of a drink from powder and hot water comprising a movable means for dosing powder and for pouring the dose into a drink vessel arranged under an opening from a supply of powder substance and a hot water container/heater with a conduit having a valve, the opening of the conduit from the container being arranged over and directed to the drink vessel and the dosing means (13, 15) having an activating member (34,35) arranged in one position of the dosing means to keep the valve (31,32,33) open against the action of a spring, characterized in that the dosing member is shaped as a movable slide (13,100) and is movable from a non dispensing first position to a pulled-out position (second position) to deliver a dose of powder and to a pushed-in position (third position) to keep the valve (31,32,33) open.

2. Device according to Claim 1, characterized by a transverse wall (29) arranged at the underside of a bottom plate (11) arranged beneath the dosing means (13, 15) and having an opening for the passage of the end of a pipe (30) which is in communicating connection with a container with hot water, an elastic hose (31) being pushed over the pipe end, and by two resilient converging lips (32,33) between the side walls (2,3), the hose being located between the lips and due to the resiliency of the lips closely clamped between them, the free end of the hose ending under and mainly in the centre of the emptying edge (12) of the bottom plate (11).

3. Device according to Claim 2, characterized in that the slide comprises a plane cover plate (20) extending forwards from the bottom surface, the free end of the plate forming a grip flange (21), the cover plate (20) protecting the walls in the space in which the slide is moved against contact with hot steam from the contents of a drink vessel placed under the emptying edge (12) of the bottom plate (11).

4. Device according to Claim 3, characterized by a strip (37) arranged at the underside of and across the cover plate (20) between side walls (2,3) and having a longitudinal groove (38) for covering an emptying edge (12).

5. Device according to Claim 2, characterized by legs (34,35) at each side of the dosing slide (13) and directed downwardly against the resilient lips (32,33), the rear free end of the legs being pointed and arranged to be moved in between the resilient lips (32,33), whereby when the dosing slide (13) is moved from its first position to its third position located a distance in the opposite direction to the first position the legs (34,35) open the lips and thereby also the hose (31).

6. Device according to Claim 4, characterized in that the cover plate (20) has such an extension that the plate in the third position of the slide (13) protects the walls in the space in which the slide moves when displaced from the first to the second position, and that a strip (37) has such an extension that in the third position for the dosing slide the strip (37) covers the emptying edge (12).

7. Device according to Claim 1, characterized in that the valve comprises a ridge (144) on one side of the hose (131) and a movable cross bar (142) at the other side, which by a spring (143), is pressed against the ridge (144), and that the slide (100) is arranged in one position to keep the valve open.

8. Device according to any preceeding Claim, characterized in that it has a slot-machine arranged to release a catch for the movements of the dosing member.

9. Device according to any preceeding Claim, characterized in that it has a slot-machine with a motor for the movements of the dosing member.

**Revendications**

1. Dispositif pour préparer des tasses d'une boisson à partir d'une poudre et d'eau chaude, comprenant un organe mobile pour doser la poudre et pour verser la dose dans un réservoir de boisson agencé sous une ouverture à partir d'une alimentation de substance en poudre et d'un récipient réchauffeur d'eau chaude mini d'un conduit présentant un clapet, l'ouverture du conduit à partir du récipient étant agencée au-dessus et dirigée vers le réservoir de boisson et l'organe doseur (13, 15) comportant un élément d'activation (34, 35) agencé dans une position de l'organe doseur pour maintenir le clapet (31, 32, 33) ouvert contre l'action d'un ressort, caractérisé en ce que l'organe doseur est réalisé sous la forme d'un coulisseau mobile (13,100), déplaçable à partir d'une première position de non-distribution jusqu'à une seconde position d'extraction à l'extérieur pour fournir une dose de poudre, et jusqu'à une troisième position par pousse vers l'intérieur pour maintenir le clapet (31, 32, 33) ouvert.

2. Dispositif selon la revendication 1, caractérisé en ce qu'il comprend une paroi transversale (29) agencée à la face intérieure d'une plaque de base (11) disposée au-dessous de l'organe doseur (13, 15) et ayant une ouverture pour le passage de l'extrémité d'un tube (30) qui communique avec un récipient d'eau chaude, un tuyau élastique (31) étant poussé au-dessus de l'extrémité du tube, et deux lèvres convergentes élastiques (32, 33) entre les parois latérales (2, 3), le tuyau étant situé entre les lèvres et l'extrémité libre du tuyau se situant au-dessous et essentiellement au centre du bord de vidage (12) de la plaque de base (11) en raison de l'élasticité des lèvres étroitement serrées entre elles.

3. Dispositif selon la revendication 2, caractérisé en ce que le coulisseau comprend une plaque plane formant un couvercle (20) qui s'étend en avant de la surface de base, l'extrémité libre de cette plaque formant un rebord de préhension (21), la plaque de couvercle (20) protégeant les parois dans l'espace dans lequel le coulisseau est déplacé contre le contact avec la vapeur chaude du contenu d'un réservoir de boisson placé sous le bord de vidage (12) de la plaque de base (11).

4. Dispositif selon la revendication 3, caractérisé par une bande (37) agencée sur la face inférieure et transversalement à la plaque couvercle (20) entre les parois latérales (2, 3), et présentant une rainure longitudinale (34) pour couvir le bord de vidage (12).

5. Dispositif selon la revendication 2, caractérisé en ce qu'il comprend des pieds (34, 35) de chaque côté du coulisseau doseur (13) et dirigés vers le bas contre les lèvres élastiques (32, 33), l'extrémité libre arrière des pieds étant orientée et agencée pour être déplacée entre les lèvres élastiques (32, 33) de sorte que lorsque le coulisseau doseur (13) est déplacé à partir de sa première position jusqu'à sa troisième position située à une certaine distance dans la direction opposée à la première position, les pieds (34, 35) ouvrent les lèvres et de ce fait également le tuyau (31).

6. Dispositif selon la revendication 4, caractérisé en ce que la plaque couvercle (20) présente une extension telle que cette plaque dans la troisième position du coulisseau (13) protège les parois dans l'espace dans lequel se déplace le coulisseau lorsqu'il est déplacé de la première jusqu'à la seconde position, et en ce que la bande (37) comporte une extension réalisée de manière que dans la troisième position du coulisseau doseur, la bande (37) recouvre le bord de vidage (12).

7. Dispositif selon la revendication 1, caractérisé en ce que le clapet comprend une barette (144) sur un côté du tuyau (131) et une traverse mobile (142) sur l'autre côté, qui est pressée contre la barrette (144) par un ressort (143), et le coulisseau (100) est disposé dans une position pour maintenir le clapet ouvert.

8. Dispositif selon l'une quelconque des revendications précédentes, caractérisé en ce qu'il comprend un distributeur automatique agencé pour libérer un loquet pour les déplacements de l'organe doseur.

9. Dispositif selon l'une quelconque des revendications précédentes, caractérisé en ce qu'il comprend un distributeur automatique avec un moteur pour les déplacements de l'organe doseur.

## Patentansprüche

1. Gerät zur portionsweisen Bereitung eines Getränkes aus Pulver und Heisswasser, umfassend ein bewegliches Organ zur Dosierung des Pulvers und zum Schütten der Portion in ein Getränkegefäss, das unter einer Öffnung eines Vorrats für Pulversubstanz und eines Heisswasserbehälters/-erhitzers mit einer mit einem Ventil versehenen Leitung angeordnet ist, wobei die Öffnung der Leitung vom Behälter oberhalb und gerichtet zum Getränkegefäss gelegen ist und das Dosierorgan (13, 15) ein Betätigungsorgan (34, 35) aufweist, welches derart ausgebildet ist, dass es in der ersten Lage des Dosierorganes das Ventil (31, 32, 33) gegen die Wirkung einer Feder offenhält, dadurch gekennzeichnet, dass das Dosierorgan die Form eines beweglichen Schiebers (13,100) hat und von einer ersten, nichtverteilenden Lage zu einer ausgezogenen Lage (zweiten Lage) zur Ausgabe einer Pulverdosis und zu einer eingeschobenen Lage (dritten Lage) zur Offenhaltung des Ventils (31, 32, 33) beweglich ist.

2. Gerät nach Anspruch 1, gekennzeichnet durch eine Querwand (29), die an der Unterseite einer unterhalb des Dosierorganes (13, 15) gelegenen Bodenplatte (11) angeordnet und mit einer Öffnung zum Durchlass eines Rohrendes (30) versehen ist, wobei das Rohr in kommunizierender Verbindung mit einem Heisswasserbehälter steht und eine elastischer Schlauch (31) über das Rohrende gezogen ist, und durch zwei im Winkel gegeneinander gerichtete, federnde Lippen (32, 33) zwischen den Seitenwänden (2, 3), wobei der Schlauch sich zwischen den Lippen, dicht eingeklemmt durch deren Federkraft, befindet und das freie Ende des Schlauches unter und hauptsächlich im Zentrum der Entleerungskante (12) der Bodenplatte (11) endet.

3. Gerät nach Anspruch 2, dadurch gekennzeichnet, dass der Schieber aus einer flachen, von der Bodenfläche sich nach vorn erstreckenden Deckplatte (20) besteht, deren freies Ende eine Greifzunge (21) bildet, wobei die Wände im Raum, in dem sich der Schieber bewegt, durch die Deckplatte (20) gegen Kontakt mit dem heissen Dampf vom Inhalt eines unter der Entleerungskante (12) der Bodenplatte (11) befindlichen Getränkegefässes geschützt werden.

4. Gerät nach Anspruch 3, gekennzeichnet durch eine Streifen (37), der an der Unterseite der Deckplatte (20) und quer zwischen den Seitenwänden (2, 3) angebracht ist und eine längsgehende Spur (38) aufweist, die zum Decken einer Entleerungskante (12) dient.

5. Gerät nach Anspruch 2, gekennzeichnet durch nach unten gegen die federnden Lippen (32, 33) gerichtete Schenkel (34, 35) an jeder Seite des Dosierschiebars (13), wobei das hintere, freie Ende der Schenkel spitz und derart ausgeformt ist, dass es zwischen die federnden Lippen (32, 33) eingeschoben werden kann, so dass die Schenkel (34, 35), wenn der Dosierschieber (13) von seiner ersten Lage zu seiner dritten Lage bewegt wird, die sich in einem Abstand in entgegengesetzter Richtung zur ersten Lage befindet, die Lippen und damit ebenfalls den Schlauch öffnen.

6. Gerät nach Anspruch 4, dadurch gekennzeichnet, dass die Deckplatte (20) eine solche Erstreckung hat, dass sie in der dritten Lage des Schiebers (13) die Wände im Raum schützt, in dem sich der Schieber bei der Verschiebung von seiner ersten zur zweiten Lage bewegt, und dass ein Streifen (37) eine solche Erstreckung hat, dass er in der dritten Lage des Dosierschiebers die Entleerungskante (12) deckt.

7. Gerät nach Anspruch 1, dadurch gekennzeichnet, dass das Ventil an einer Seite des Schlauches (131) einen Nocken (144) und an der anderen Seite eine bewegliche Querstange (142) aufweist, die durch eine Feder (143) gegen den Nocken (144) gepresst wird, und dass der Schieber (100) derart angeordnet ist, dass er in einer Lage das Ventil offenhält.

8. Gerät nach einem der Vorhergehenden Ansprüche, dadurch gekennzeichnet, dass es einen Münzautomaten hat, der zum Lösen einer Sperre für die Bewegungen des Dosierorganes angeordnet ist.

9. Gerät nach einem der vorhergehenden Ansprüche, dadurch gekennzeichnet, dass es einen Münzautomaten mit einem Motor für die Bewegungen des Dosierorganes hat.

Fig. 1

*Fig. 2*

*Fig. 4*

*Fig. 3*

Fig.6

Fig.5

3